# EUROPÄISCHE PATENTSCHRIFT

(11) **EP 2 719 711 B1**
(45) Veröffentlichungstag und Bekanntmachung des Hinweises auf die Patenterteilung: **29.07.2015**
(21) Anmeldenummer: 13004348.2
(22) Anmeldetag: 04.09.2013
(51) Int. Cl.: C08F 2/26, C09D 4/06

(54) **Phosphorgruppenhaltige Polyalkylenglykol-Blockcopolymere und deren Verwendung als Emulgatoren für die Emulsionspolymerisation**
Polyalkylene glycol block copolymers containing phosphorous groups and their use as emulsifiers in emulsion polymerization
Copolymères en bloc de polyalkylèneglycol contenant des groupes phosphore et leur utilisation comme émulsifiants pour la polymérisation en émulsion

(30) Priorität: 09.10.2012 DE 102012019789
(43) Veröffentlichungstag der Anmeldung: 16.04.2014
(73) Patentinhaber: Clariant Finance (BVI) Limited, Road Town, Tortola (VG)
(72) Erfinder: Ahrens, Dl Hendrik, 65830 Kriftel (DE)
(74) Vertreter: Mikulecky, Klaus

(56) Entgegenhaltungen:
- EP-A1- 1 036 802
- EP-A2- 0 037 150
- EP-A2- 0 256 427
- EP-A2- 1 077 237
- EP-A2- 1 323 741
- WO-A1-99/46337
- US-A1- 2003 100 671

## Beschreibung

Gegenstand der vorliegenden Erfindung sind wässrige Polymerdispersionen, die phosphorgruppenhaltige anionische Polyalkylenglykol-Blockcopolymere enthalten, sowie ihre Verwendung als Bindemittel für makromolekulare Materialien aller Art, wie beispielsweise Fasermaterialien, Papiermassefärbung, Haftklebstolle, Beton, Trockenmörtelmischungen, Beschichtungsstoffe, Lacke, Farben und ihre Verwendung zum Bedrucken von zweidimensionalen Flächengebilden wie beispielsweise Papier, Kartonagen, Kunststoff, Textilien und Leder.

Wässrige Polymerdispersionen werden nach dem Stand der Technik durch Emulsionspolymerisation olefinisch ungesättigter Monomere in Gegenwart anionischer und nichtionischer Emulgatoren hergestellt.

Übliche anionische Emulgatoren sind Natrium-, Kalium- und Ammoniumsalze von Fettsäuren, Natriumalkylbenzolsulfonate, Natriumalkylsulfonate, Natriumolefinsulfonate, Natriumpolynaphthalensulfonate, Natriumdialkyldiphenyletherdisulfonate, Natrium-, Kalium- und Ammoniumalkylsulfate, Natrium-, Kalium- und Ammoniumalkylpolyethylenglykolethersulfate, Natrium-, Kalium- und Ammoniumalkylphenolpolyethylenglykolethersulfate, Natrium-, Kalium- und Ammoniummono- und - dialkylsulfosuccinate und -monoalkylpolyoxethylsulfosuccinate, Alkylpolyethylenglykoletherphosphorsäure-mono-, di- und triester und deren Mischungen und Alkylphenolpolyethylenglykol-etherphosphorsäuremono-, di- und triester und deren Mischungen, sowie deren Natrium-, Kalium- und Ammoniumsalze.

Als nichtionische Emulgatoren werden üblicherweise Alkylphenolpolyethylenglykolether, Alkylpolyethylenglykolether, Fettsäurepolyethylenglykolether, Ethylen/Propylenglykol-Blockpolymere und Sorbitanesterpolyethylenglykolether eingesetzt.

Emulsionspolymerisationen werden in der Regel unter Gesamtansatzvorlage oder im Zulaufverfahren durchgeführt, bei der nur ein kleiner Teil der zu polymerisierenden Monomeren im Polymerisationsgefäß vorgelegt und der größere Teil (50 bis 99 Gew.-%) während des Fortschreitens der Polymerisation zugesetzt wird. Die anionischen oder nichtionischen Emulgatoren werden wahlweise während der Emulsionspolymerisation im Zulauf oder in der Reaktorvorlage eingesetzt, oder nachträglich der hergestellten Polymerdispersion zur Stabilisierung zugesetzt.

Die bekannten anionischen und nichtionischen Emulgatoren steuern insbesondere die Polymerteilchengröße der wässrigen Polymerdispersionen und verhindern die Bildung von Koagulat, das sich während der Polymerisationsreaktion bilden und zu Ablagerungen an den Reaktionsgefäßwandungen und Rührwerken führen kann. Weiterhin verbessern die bekannten Emulgatoren im Allgemeinen die Scher-, Elektrolyt- und Gefrier-Tau-Beständigkeit von wässrigen Polymerdispersionen.

WO-A-99/46337 beschreibt wässrige Polymerdispersionen, die phosphorgruppenhaltigen Emulgatoren enthalten, die zu mindestens 50 Gew.-% aus Ethylenoxid- und Propylenoxidgruppen bestehen.

US-2003/100671 beschreibt wässrige Vinylacetat/Ethylen Polymerdispersionen, die phosphatgruppenhaltige Tenside enthalten.

US-5416134 beschreibt Haftklebstoffdispersionen, die Kaliumalkylpolyethoxyphosphate als Emulgatoren für Acrylatpolymere enthalten.

US-6254985 beschreibt Haftklebstoffdispersionen, die Kaliumalkylpolyethoxysulfate als Emulgatoren für Acrylatpolymere enthalten.

EP-A-1077237 beschreibt eine Bindemittelzubereitung, worin der anionische Emulgator ausgewählt ist aus C₁₀ bis C₁₈ Alkylsulfaten, den Sulfaten ethoxylierter C₁₀-C₂₀-Alkanole mit einem Alkoxylierungsgrad ≤ 5 und den Mono- und D₁-C₈-C₁₆-Alkyldiphenyletherdisulfonaten.

EP-A-0960135 beschreibt ein Emulgatorsystem, bestehend unter anderem aus wenigstens einem Salz eines Schwefelsäurehalbesters eines C₉-C₁₅-Alkohols oder eines alkoxylierten C₉-C₁₅-Alkohols und deren Verwendung als Emulgatorsystem zur Herstellung einer wässrigen Polymerisatdispersion durch radikalische Emulsionspolymerisation.

EP-A-0037150 beschreibt wässrige Polymerdispersionen, die nichtionische Emulgatoren mit 60 bis 400 Ethylenoxidgruppen enthalten.

DE-A-10332527 beschreibt wässrige Polymerdispersionen, die in Gegenwart von Alkylenoxid-Mischpolymerisaten hergestellt wurden.

Insbesondere werden Natrium-, Kalium- und Ammoniumalkylpolyethylenglykolethersulfate von synthetischen und natürlichen, linearen und verzweigten, gesättigten und ungesättigten C₈ bis C₁₈-Alkoholen mit 1 bis 50 Ethylenoxidgruppen als anionische Emulgatoren verwendet. Diese Gruppe der anionischen Emulgatoren eignet sich sehr gut für die Kontrolle der Polymerteilchengröße, so dass sehr feinteilige Polymerteilchen erhalten werden, und sie verhindern sehr gut die Koagulation der Polymerteilchen während der Emulsionspolymerisation. Auch Alkylpolyethylenglykoletherphosphorsäureester, deren Mono- und Diester, Gemische der Mono- und Diester in saurer Form und deren Natrium-, Kalium- und Ammoniumsalze von C₈ bis C₁₈-Alkoholen mit 1 bis 50 Ethylenoxidgruppen eignen sich in gleicher Weise wie deren analoge Schwefelsäurehalbester für die Kontrolle der Teilchengröße und die Verhinderung der Koagulation.

Nachteil der bekannten, anionische und nichtionische Emulgatoren enthaltenden, wässrigen Polymerdispersionen ist aber die oft geringe Farbstärkeausbeute, die man erzielt, wenn man die wässrigen Polymerdispersionen als Pigmentbindemittel für wässrige Dispersionsfarben verwendet. Insbesondere beim Einfärben der mit wässrigen Polymerdispersionen hergestellten Weißdispersionsfarben mit Abtönpasten, die organische Pigmente enthalten, ist die Farbstärkeausbeute oft nicht optimal. Eine zu geringe Farbstärkeausbeute erfordert eine höhere Dosierung der Farbpasten und der darin enthaltenen organischen Pigmente, was unwirtschaftlich ist. Der Fachmann ist daher auf der Suche nach geeigneten Lösungen, um die Farbstärkeausbeute bei gleichem Einsatz der Abtönpasten und der organischen Pigmente zu erhöhen.

Nach dem Stand der Technik sind auch Schwefelsäurehalbester von Polyalkylenglykol-Blockcopolymeren als Emulgatoren bekannt, bei deren Verwendung im Allgemeinen bereits eine sehr gute Farbstärkeausbeute erzielt wird. Ein Schwefelsäurehalbester dieser Gruppe ist Emulsogen^{®} PF 20 S, welches in der Firmenschrift "Emulgatoren, Schutzkolloide, Entschäumer für die Emulsionspolymerisation" der Fa. Clariant vom März 1999 als Emulgator für die Emulsionspolymerisation beschrieben und empfohlen wird. Emulsogen PF 20 S ist ein Polyalkylenglykolethersulfat Ammoniumsalz. Schwefelsäurehalbester von Polyalkylenglykol-Blockcopolymeren werden durch Umsetzung von Ethylenoxid/Propylenoxid-Blockpolymeren mit Amidosulfonsäure erhalten, wobei die Schwefelsäurehalbester als Ammoniumsalz vorliegen. Eine andere Darstellung der Schwefelsäurehalbester erfolgt durch Umsetzen der Ethylenoxid/Propylenoxid-Blockcopolymere mit Schwefeltrioxid und anschließender Neutralisation mit Natronlauge, Kalilauge oder Ammoniak. Eine andere Darstellung der Schwefelsäurehalbester erfolgt durch Umsetzen der Ethylenoxid/Propylenoxid-Blockcopolymere mit Chlorsulfonsäure und anschließender Neutralisation mit Natronlauge, Kalilauge oder Ammoniak-Lösung. Die Schwefelsäurehalbester der Polyalkylenglykol-Blockcopolymere enthalten üblicherweise im Kern eine Polypropylenglykolkette mit 3 bis 100 Propylenoxideinheiten und endständige Polyethylenglykolketten mit 1 bis 100 Ethylenoxideinheiten.

Nachteil der Schwefelsäurehalbester, die mittels Amidosulfonsäure hergestellt werden, ist, dass sie in Form ihrer Ammoniumsalze anfallen. Kalium- und Natriumsalz lassen sich nur aufwendig durch Ionenaustausch gewinnen. Die Synthese mit Schwefeltrioxid kann zu einem hohen Gehalt an freier Schwefelsäure führen und ist zudem an ein kontinuierliches Verfahren gebunden, so dass die Herstellung von kleinen Produktmengen unwirtschaftlich ist. Die Synthese mittels Chlorsulfonsäure führt zu halogenorganischen Nebenprodukten.

Aufgabe der vorliegenden Erfindung war es daher, neue Emulgatoren für die Emulsionspolymerisation aufzufinden, die einen hohen Feststoffgehalt der Polymerdispersionen ermöglichen und eine hohe Farbstärke der mit den erfindungsgemäßen Polymerdispersionen hergestellten und mit Farbpasten abgetönten Dispersionsfarben erzielen.

Eine weitere Aufgabe der vorliegenden Erfindung war es, neue Emulgatoren für die Emulsionspolymerisation aufzufinden, die frei sind von Alkylphenolen, Alkylphenolethoxylaten, Stickstoffatomen und Ammonium-Ionen, und die einen geringeren Elektrolytgehalt aufweisen, und sie sollen auch für die Verwendung in Korrosionsschutzlacken geeignet sein.

Eine weitere Aufgabe der vorliegenden Erfindung war es, Emulgatoren für die Emulsionspolymerisation aufzufinden, die nach der europäischen Verordnung 2008/1272/EG nicht kennzeichnungspflichtig sind.

Überraschenderweise wurde gefunden, dass wässrige Polymerdispersionen, die phosphorgruppenhaltige Polyalkylenglykol-Blockcopolymerisate der Formel (I) in Kombination mit nichtionischen Tensiden enthalten, diese Aufgabe erfüllen.

Gegenstand der Erfindung sind daher wässrige Polymerdispersionen, enthaltend
(A) 1,0 bis 70,0 Gew.-% eines aus mindestens einem olefinisch ungesättigten Monomeren aufgebauten und durch Emulsionspolymerisation hergestellten Polymers,
(B) 0,01 bis 7,0 Gew.-% mindestens eines Polyalkylenglykol-Blockcopolymeren der Formel (I), 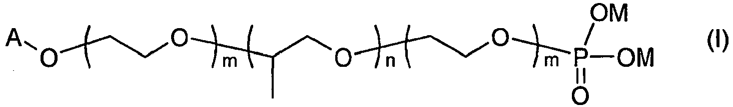 worin
   - A: ein Wasserstoffatom oder eine Phosphatgruppe -PO₃M₂,
   - M: ein Wasserstoffatom oder ein Natrium Kalium-, oder Ammoniumion,
   - m: eine Zahl von 1 bis 100 und
   - n: eine Zahl von 3 bis 100 darstellt, und
(E) Wasser.

Die erfindungsgemäßen wässrigen Polymerdispersionen können darüber hinaus gegebenenfalls einen oder mehrere der Bestandteile
(C) 0, vorzugsweise 0,01 bis 5,0 Gew.-% eines nichtionischen Tensides und
(D) 0, vorzugsweise 0,01 bis 10,0 Gew.-% weitere, für die Herstellung von wässrigen Polymerdispersionen übliche Hilfsmittel wie zusätzliche Netzmittel, Schutzkolloide, Lösemittel, Entschäumer, Konservierungsmittel, Puffersubstanzen und pH-Regulatoren
enthalten.

Die erfindungsgemäßen, wässrigen Polymerdispersionen sind scherbeständig, eintrockenbeständig, lagerbeständig, schäumen bei der Applikation nicht oder nur wenig und verfügen über eine hervorragende Rheologie.

Ein weiterer Gegenstand der Erfindung ist ein Verfahren zur Emulsionspolymerisation, indem man 1,0 bis 70,0 Gew.-% mindestens eines olefinisch ungesättigten Monomers mittels radikalischer Polymerisation in Gegenwart von 0,01 bis 5,0 Gew.-% mindestens eines Polyalkylenglykol-Blockcopolymeren der Formel (I), Wasser, und gegebenenfalls 0 bis 5,0 Gew.-% eines nichtionischen Tensides umsetzt.

Ein weiterer Gegenstand der Erfindung ist die Verwendung von Phosphorsäureestern der Formel (I) in saurer Form für die Emulsionspolymerisation und die Neutralisation der Phosphorsäureester nach dem Emulsionspolymerisationsprozess mit einem geeigneten Nautralisationsagenz. Phosphorsäureestern der Formel (I) haben gegenüber Schwefelsäurehalbestern den Vorteil, dass sie in Form der freien Säure vorliegen und somit einen geringeren Elektrolytgehalt aufweisen. Phosphorsäureester haben zusätzlich den Vorteil gegenüber Schwefelsäurehalbestern, dass sie für wässrige Korrosionsschutzlacke gut geeignet sind.

Ein weiterer Gegenstand der Erfindung ist die Verwendung von erfindungsgemäßen wässrigen Polymerdispersionen als Pigmentbindemittel für die Herstellung von Formulierungen enthaltend mindestens ein anorganisches oder organisches Pigment.

In einer bevorzugten Ausführungsform ist der Anteil Wasser ad 100 Gew.-%.

Bevorzugte olefinisch ungesättigte Monomere sind beispielsweise
- Vinylmonomere, wie Carbonsäureester des Vinylalkohols, beispielsweise Vinylacetat, Vinylpropionat, Vinylether der Isononansäure oder der Isodecansäure, die auch als C₉ und C₁₀-Versaticsäuren bezeichnet werden,
- Arylsubstituierte Olefine, wie Styrol und Stilben,
- olefinisch ungesättigte Carbonsäureester, wie Methylacrylat, Ethylacrylat, Propylacrylat, n-Butylacrylat, i-Butylacrylat, Pentylacrylat, Hexylacrylat, 2-Ethylhexylacrylat, Tridecyacrylat, Stearylacrylat, Hydroxyethylacrylat, Hydroxypropylacrylat sowie die entsprechenden Methacrylsäureester,
- olefinisch ungesättigte Dicarbonsäureester, wie Dimethylmaleinat, Diethylmaleinat, Dipropylmaleinat, Dibutylmaleinat, Dipentylmaleinat, Dihexylmaleinat und Di-2-ethylhexylmaleinat,
- olefinisch ungesättigte Carbonsäuren und Dicarbonsäuren, wie Acrylsäure, Methacrylsäure, Itaconsäure, Maleinsäure und Fumarsäure und ihre Natrium-, Kalium- und Ammoniumsalze,
- olefinisch ungesättigte Sulfonsäuren und Phosphonsäuren und ihre Alkali- und Ammoniumsalze, wie Vinylsulfonsäure, Vinylphosphonsäure, Acrylamidomethylpropansulfonsäure und ihre Alkali- und Ammonium-, Alkylammonium- und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, Acrylamid, Methacrylamid, N-Methylacrylamid, N-Ethylacrylamid, N-Propylacrylamid, N-Methylolacrylamid sowie die entsprechenden Methacrylsäurederivate und Vinylmethylacetamid.

In einer bevorzugten Ausführungsform werden die oben genannten Monomere mit weiteren Comonomeren, vorzugsweise Olefinen oder halogenierten Olefinen mit 2 bis 8 Kohlenstoffatomen wie z.B. Ethylen, Propen, Butene, Pentene, 1,3-Butadien, Chloropren, Vinylchlorid, Vinylidenchlorid, Vinylidenfluorid und Tetrafluorethylen polymerisiert.

Zur Herstellung der Polymerdispersionen werden die mit Wasser nicht mischbaren Monomere im Allgemeinen mit Hilfe der Komponente (B) und gegebenenfalls der Komponente (C) in der wässrigen Phase in Form von Mizellen fein verteilt und die radikalische Polymerisationsreaktion durch Initiatoren wie beispielsweise Ammonium-, Natrium- und Kaliumperoxodisulfat gestartet. Alternativ können auch Redoxinitiatoren Verwendung finden.

Die Komponente (B) sind Phosphorsäureester von Polyalkylenglykol-Blockpolymeren, die durch Umsetzen von Ethylenoxid/Propylenoxid-Blockcopolymeren mit einem Phosphatierungsreagenz hergestellt werden können. Geeignete Ethylenoxid/Propylenoxid-Blockcopolymeren werden durch schrittweise Alkoxylierung von Propypenglykol, Dipropylenglykol, Tripropylenglykol oder Polypropylenglykol mit einem Molekulargewicht von 300 bis 500 g/mol hergestellt. Dabei wird zunächst Propylenoxid der gewünschten Menge an das Ausgangsmolekül unter alkalischen Bedingungen addiert und anschließend die gewünschte Menge Ethylenoxid, so dass ein ABA-Blockcopolymer entsteht, dass im Kern aus einer Polypropylenglykolkette und endständigen Polyethylenglykolketten besteht. Alkalische Katalysatoren können Kaliumhydroxid, Natriumhydroxid oder Calciumhydroxid sein, welche nach der erfolgten Polyaddition mittel niedermolekularer organischer Säuren wie beispielsweise Essigsäure, Propionsäure, Milchsäure oder längerkettigen C₆ bis C₁₂-Carbonsäuren neutralisiert werden.

Geeignete Syntheseverfahren für die Phosphatierungsreaktion der Polyalkylenglykol-Blockpolymere verwenden Orthophoshorsäure, Polyphosphorsäure, Phosphorpentoxid oder Phosphorylchlorid als Phosphatierungsreagenz. Die so erhaltenen phosphorgruppenhaltigen Polyalkylenglykol-Blockcopolymere liegen im Allgemeinen als Gemische vor, wobei die Polyalkylenglykol-Blockcopolymere ein oder zwei Phosphorsäuregruppen, aber auch nicht umgesetzte Polyalkylenglykol-Blockcopolymere enthalten, und die Phosphatgruppen als Mono-, Di und Triester vorliegen können. Je nach Phosphatierungsreagenz und dem eingesetzten molaren Verhältnis der Polyalkylenglykol-Blockcopolymere zum Phosphatierungsreagenz entstehen phosphorgruppenhaltige Polyalkylenglykol-Blockcopolymere unterschiedlicher Zusammensetzung.

Die Komponente (C) sind nichtionische Tenside, vorzugsweise ausgewählt aus der Gruppe der Fettalkoholethoxylate, Di- und Tristyrylphenolethoxylate, Fettsäureethoxylate, Ester von Polyethylenglykolen mit Fettsäuren, Fettsäurealkanolamidethoxylate, EO/PO Blockcopolymere, Fettalkohol-EO/PO Additionsprodukte, sowie endgruppenverschlossene Fettalkoholethoxylate. Gemischte Alkoxylate können sowohl zufällig als auch blockweise alkoxyliert sein, sofern im Folgenden nicht anders beschrieben.

Für die Herstellung der Fettalkoholethoxylate geeignete Alkohole sind Fettalkohole mit 8 bis 22 Kohlenstoffatomen natürlicher Herkunft wie Octylalkohol, Decylalkohol, Laurylalkohol, Myristylalkohol, Cetylalkohol, Palmitinol, Stearylalkohol, Eicosanol, Behenylalkohol, Oleylalkohol, Linolalkohol, Linolenol, Ricinolalkohol oder Mischungen von C₈- bis C₂₂-Kettenschnitten, wie beispielswiese Cocosfettalkohol und Palmkernölalkohol. Weiterhin sind synthetische primäre Alkohole wie Iso-C₁₃-Oxoalkohole, C₁₃/C₁₅-Oxoalkohole, Mischungen linearer, einfach verzweigter oder mehrfach verzweigter Oxoalkohole mit einer mittleren C-Kettenlänge von 10 bis 15 Kohlenstoffatomen, Ziegleralkohole mit 8 bis 22 Kohlenstoffatomen und Guerbetalkohole mit 10, 12, 14, 16 oder 18 Kohlenstoffatomen und lineare und verzweigte, sekundäre Alkanole mit 6 bis 22 Kohlenstoffatomen geeignet. Die verwendeten Alkohole können gesättigt und ungesättigt vorliegen. Die Fettalkohole werden in an sich bekannter Weise mit Hilfe von alkalischen oder sauren Katalysatoren mit Ethylenoxid umgesetzt. Der mittlere Ethoxylierungsgrad der Alkohole beträgt 1 bis 200 Mol Ethylenoxid, bevorzugt 5 bis 100 und besonders bevorzugt 10 bis 40 Mol Ethylenoxid.

In ähnlicher Weise werden auch Di- und Tristyrylphenolethoxylate aus Di- und Tristyrylphenol hergestellt, wobei die Alkohole als Mischungen aus Mono-, Di- und Tristyrylphenol vorliegen können und der mittlere Substituierungsgrad von 2 bis 3 1-Phenylethyleinheiten betragen kann.

Geeignete Fettsäureethoxylate sind Umsetzungprodukte von Ethylenoxid mit natürlichen und synthetischen Fettsäuren, welche mit 1 bis 200 Mol Ethylenoxid, bevorzugt 5 bis 100 und besonders bevorzugt 10 bis 40 Mol Ethylenoxid umgesetzt wurden.

Weitere für die Umsetzung mit Ethylenoxid geeignete Fettsäurederivate sind, Fettsäuresorbitanester, Rizinusöl, Fettsäureglycerinester, Fettsäurepolyglycerinester und Fettsäureethanolamide. Geeignete Fettsäuren für die Herstellung der Fettsäurederivate sind Caprinsäure, Laurinsäure, Myristinsäure, Palmitinsäuren, Margarinsäure, Stearinsäure, Arachinsäure, Behensäure, Palimtoelinsäure, Ölsäure und natürlich vorkommende Mischungen wie Palmkernölfettsäure, Rapsölfettsäure, Sonnenblumenölfettsäure, Sojaölfettsäure oder Harzsäuren wie Tallölfettsäure. Die als Rohstoff verwendeten Fettsäuren können gesättigt und ungesättigt vorliegen.

Weitere als Komponente (C) geeignete nichtionische Tenside sind Ethylenoxid/Propylenoxid-Blockcopolymere mit einem mittleren Molekulargewicht von vorzugsweise 1000 bis 10000 g/mol und einem Ethylenoxidgehalt von vorzugsweise 10 bis 99 Gew.-% im Molekül. Die Ethylenoxid/Propylenoxid-Blockcopolymere werden durch Anlagerung von Ethylenoxid an Polypropylenglykol oder durch Anlagerung von Propylenoxid an Polyethylenglykol hergestellt.

Weitere als Komponente (C) geeignete nichtionische Tenside sind Fettalkohol-EO/PO Additionsprodukte und endgruppenverschlossene Fettalkoholethoxylate. Geeignete Fettalkohol-EO/PO Additionsprodukte werden durch blockweise Anlagerung von Ethylenoxid und Propylenoxid an Fettalkohole hergestellt. Die Fettalkohole werden entweder zunächst mit Ethylenoxid und anschließend mit Propylenoxid umgesetzt oder in umgekehrter Reihenfolge zunächst mit Propylenoxid und anschließend mit Ethylenoxid angelagert.

Geeignete endgruppenverschlossene Fettalkoholethoxylate sind Umsetzungsprodukte von Fettalkoholethoxylaten mit Alkylhalogeniden, beispielsweise Methylchlorid, Ethylchlorid und n-Butylchlorid.

Die Komponente (D) sind weitere, für die Herstellung von wässrigen Polymerdispersonen übliche Hilfsmittel wie zusätzliche Netzmittel, Schutzkolloide, Lösemittel, Entschäumer, Konservierungsmittel, Puffersubstanzen und pH-Regulatoren.

Zusätzliche Netzmittel können Netzmittel auf Basis von Polysiloxanethern sein, beispielsweise ein Methoxypolyethoxypropyltrisiloxan, Alkindiolethoxylate und Fluortenside.

Schutzkolloide können Celluloseether wie Carboxymethylcellulose, Hydroxyethylcellulose, Methylhydroxypropylcellulose und allylgruppenmodifizierte Hydroxyethylcellulose, sowie teil- und vollverseifter Polyvinylalkohol und Polyvinylpyrrolidon sein.

Geeignete Lösemittel verbessern die Gefrier-Tau-Stabilität und sind vorzugsweise Glykolether, worunter hier Verbindungen mit Ethoxy- und/oder Propoxygruppen verstanden werden, welche mittlere Molmassen zwischen 200 und 20.000 g/mol aufweisen, insbesondere Polyethylenglykolether oder Polypropylenglykolether mit einer mittleren Molmasse zwischen 200 und 20.000 g/mol, Mono-, Di- oder Triethylenglykol, Mono-, Di- oder Tripropylenglykol, Methy-, Ethyl- Propyl-, Butyl-oder höherwertige Alkylpolyalkylenglykolether mit 1, 2, 3 oder mehreren Ethylenglykol- oder Propylenglykoleinheiten wie beispielsweise Methoxypropanol, Dipropylenglykolmonomethylether, Tripropylenglykolmonomethylether, Ethylenglykolmonobutylether, Diethylenglykolmonobutylether, Butylpolyethylenglykolether, Propylpolyethylenglykolether, Ethylpolyethylenglykolether, Methylpolyethylenglykolether, Dimethylpolyethylenglykolether, Dimethylpolypropylenglykolether, Glycerinethoxylate mit einem Molekulargewicht von 200 bis 20.000 g/mol, Pentaerythritolalkoxylate mit einem Molekulargewicht von 200 bis 20.000 g/mol, oder weitere Ethoxylierungs- und Alkoxylierungsprodukte und statistische oder Blockcopolymere die durch Addition von Ethylenoxid und/oder Propylenoxide an ein- und höherwertige Alkohole hergestellt wurden, mit einem Molekulargewicht von 200 bis 20.000 g/mol.

Angaben zu Molekulargewichten von Polymeren beziehen sich stets auf deren zahlenmittleres Molekulargewicht, sofern im Einzelfall nicht anders angegeben. Molekulargewichte sind per GPC gegen Polyethylenglykol als Standard zu bestimmen.

Geeignete Entschäumer sind vorzugsweise Mineralölentschäumer und deren Emulsionen, Siliconölentschäumer und Siliconölemulsionen, Polyalkylenglykole, Polyalkylenglykolfettsäureester, Fettsäuren, höherwertige Alkohole, Phosphorsäureester, hydrophob modifizierte Silika, Aluminiumtristearat, Polyethylenwachse und Amidwachse.

Topfkonservierer werden zur Stabilisierung der wässrigen Pigmentpräparationen und zur Verhinderung der unkontrollierten Vermehrung von Bakterien, Algen und Pilzen zugesetzt. Als Topfkonservierer geeignete Biozide sind Formaldehyd, Formaldehyd abspaltende Verbindungen, Methylisothiazolinon, Chlormethylisothiazolinon, Benzisothiazolinon, Bronopol, Dibromodicyanonbutan und silberchloridbeschichtetes Titandioxid.

Als Puffersubstanzen und pH-Regulatoren kommen vorzugsweise organische oder anorganische Basen und Säuren zum Einsatz. Bevorzugte organische Basen sind Amine, wie z. B. Ethanolamin, Diethanolamin, Triethanolamin, N,N-Dimethylethanolamin, Diisöpropylamin, 2-Amino-2-methyl-1-propanol oder Dimethylaminomethylpropanol. Bevorzugte anorganische Basen sind Natrium-, Kalium-, Lithiumhydroxid oder Ammoniak.

Eine Übersicht über gängige Verfahren, Tenside und weitere Hilfsmittel der Emulsionspolymerisation geben Peter A. Lovell und Mohamed S. EI-Aasser, in "Emulsion Polymerization and Emulsion Polymers", erschienen bei John Wiley and Sons, 1997.

Zur Herstellung der erfindungsgemäßen wässrigen Polymerdispersionen werden die Komponente (A), (B) und gegebenenfalls Komponenten (C) und (D) in einem Reaktionsgefäß vor Beginn der Polymerisationsreaktion vorgelegt oder während oder nach der Polymerisationsreaktion dem Reaktionsgefäß zugegeben.

Im Allgemeinen wird die Komponente (B) in Mengen von 0,01 bis 7, bevorzugt von 0,1 bis 5 und besonders bevorzugt von 0,2 bis 2 Gew.% verwendet.

Im Allgemeinen wird die Komponente (A) in Mengen von 1,0 bis 70,0, bevorzugt von 5,0 bis 65,0 und besonders bevorzugt von 30,0 bis 60,0 Gew.% verwendet.

Die Komponente (B) kann sowohl alleine als auch in Kombination mit anderen bereits bekannten anionischen und nichtionischen Emulgatoren des Standes der Technik verwendet werden, wie sie eingangs beschrieben wurden. Die Menge der Emulgatoren des Standes der Technik beträgt dann vorzugsweise 0,01 bis 10, insbesondere 0,1 bis 5 und besonders bevorzugt 0,2 bis 4 Gew.-% bezogen auf das Gewicht der nicht oder wenig wasserlöslichen olefinisch ungesättigte Monomere.

Die erfindungsgemäßen wässrigen Polymerdispersionen zeigen eine geringe Koagulatbildung während und nach der Polymerisation und eine Verbesserung der Scher-, Temperatur- und Lagerstabilität, der Gefrier-Tau-Stabilität und die Elektrolytstabilität gegenüber zwei- und dreiwertigen Kationen wie Calcium, Barium und Aluminium. Die erfindungsgemäßen wässrigen Polymerdispersionen bilden Filme mit geringer Wasseraufnahme, einem geringen Weißanlauf bei Kontakt mit Wasser und gute Nass- und Trockenreibechtheiten.

Bevorzugt werden die erfindungsgemäßen Polymerdispersionen zur Herstellung von Anstrich- und Dispersionsfarben, Dispersionslacken, Druckfarben, hierbei beispielsweise Textildruck-, Flexodruck-, Dekordruck- oder Tiefdruckfarben, Tapetenfarben, wasserverdünnbaren Lacken, Holzbeizen, Holzschutzsystemen und Lacken zur Oberflächenbeschichtung von Gegenständen aus beispielsweise Metall, Holz, Kunststoff, Glas, Keramik, Beton, Textilmaterial, Papier oder Kautschuk kommen.

Eine besondere Eigenschaft der erfindungsgemäßen wässrigen Polymerdispersionen ist ihre Verwendung für Malerbasislacke zum Einfärben mit wässrigen Abtönpasten. Wässrige Abtönpasten enthalten üblicherweise Buntpigmente, die beim Einfärben wässriger Malerbasislacke zum Agglomerieren neigen können. Beim Auftragen der abgetönten Lacke mit Pinsel, Rollen oder durch Sprühapplikation kann es zu Streifigkeit und zu einem unruhigen Farbbild aufgrund von Farbtonunterschieden kommen, weil die Pigmente in der Farbe und während des Trocknungsprozesses flokkulieren, so dass die Farbstärke reduziert wird. Beim Auftrag der eingefärbten Lacke werden die Pigmentagglomerate wieder aufgetrennt, aber unterschiedlich stark, so dass es zu den beobachteten Farbtonunterschieden kommt. Im Labor wird dieses Phänomen im Rubout-Test simuliert, welcher in US-3840383 beschrieben wird. Die erfindungsgemäßen wässrigen Polymerdispersionen lassen sich für Malerbasislacke verwenden, die gut mit üblichen wässrigen Abtönpasten verträglich sind, keinen Rubout beim Auftragen der abgetönten Farben und eine hohe Farbstärke der eingesetzten Buntpigmente zeigen.

Übliche wässrige Abtönpasten können organische oder anorganische Buntpigmente enthalten.

Als beispielhafte Auswahl besonders bevorzugter organischer Pigmente sind dabei Rußpigmente, wie z. B. Gas- oder Furnaceruße; Monoazo- und Disazopigmente, insbesondere die Color Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 254, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61 zu nennen.

Geeignete anorganische Pigmente sind beispielsweise Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente. Insbesondere werden die Color Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet. Bevorzugt werden auch häufig Mischungen anorganischer Pigmente verwendet. Mischungen von organischen mit anorganischen Pigmenten werden ebenfalls häufig verwendet.

Prozentangaben stehen für Gewichtsprozente, sofern nicht anders angegeben.

### Beispiele

Es werden wässrige Polymerdispersionen unter Verwenden von anionischen und nichtionischen Emulgatoren nach dem Emulsionspolymerisationsverfahren hergestellt. Anschließend werden die erhaltenen wässrigen Polymerdispersionen auf ihre physikalischen und chemischen Eigenschaften geprüft und für die Formulierung einer Weißdispersionsfarbe verwendet. Mittels 3 verschiedener Abtönpasten (Blau, Violett, Schwarz) werden die Weißdispersionsfarben abgetönt und für Farbaufstriche verwendet. Die Farbaufstriche werden koloristisch beurteilt.

### Ausprüfung der Polymerdispersionen

| | |
|---|---|
| Feststoffgehalt | Ca. 7 - 9 g der wässrigen Polymerdispersion werden auf einem Aluminiumschälchen eingewogen. Das Schälchen wird über 3 Stunden bei 105 °C im Trockenschrank getrocknet. Nach dem Abkühlen im Exsikkator wird das Schälchen erneut gewogen und der Feststoffgehalt gravimetrisch bestimmt. |
| Koagulat | Die gesamt Polymerdispersion wird über ein 100 µm-Sieb und anschließend über ein 40 µm-Sieb filtriert. Zur Beschleunigung des Filtrationsvorganges wird an die Filternutsche ein Wasserstahlvakuum angelegt. Beide Filter werden getrocknet und der Rückstand gravimetrisch bestimmt. |
| Teilchengröße | Die Teilchengröße der Polymerdispersion wird mittels eines Malvern Zetasizer Partikelgrößenmessgerät nach dem dynamischen Lichtstreuungsverfahren bestimmt. |
| Viskosität | Die Viskosität der wässrigen Polymerdispersion wird mit einem Bohlin-Viskometer bei einer Scherrate von 1/10 sec⁻¹ gemessen. |
| Gefrier-Tau-Stabilität | Die wässrige Polymerdispersion wird 24 Stunden bei -18 °C gelagert und anschließend bei 25 °C aufgetaut. Bildet die Polymerdispersion nach dem Auftauen wieder eine flüssige, homogene Dispersion, wird der Vorgang insgesamt 5 Mal durchgeführt. |
| Lagerstabilitätstest | Die Polymerdispersion wird eine Woche bei 60 °C gelagert und nach dem Abkühlen visuell beurteilt. |
| Elektrolytbeständigkeit | 52 g einer Kunststoffdispersion werden in einem 250 ml Becherglas vorgelegt und 52 g einer 5 %igen CaCl₂-Lösung vorsichtig unter Rühren zugegeben. Die Mischung wird sofort nach der vollständigen Zugabe der CaCl₂-Lösung visuell auf Koagulatbildung überprüft, sowie nach 24 Stunden. Flockt die Polymerdispersion aus, ist sie nicht stabil gegenüber Elektrolyten. |

### Formulierung der Weißdispersionsfarben

| Nr. | Komponente | Zusammensetzung/Eigenschaft | in Gew.-% |
|---|---|---|---|
| 1 | Wasser | | 18,1 |
| 2 | Tylose^{®} MH 10000 YP2, Fa. SE Tylose | Celluloseether, Verdicker | 0,2 |
| 3 | Mowiplus^{®} XW 330, Fa. Celanese | Dispergiermittel für anorganische Pigmente | 0,3 |
| 4 | D-Foam-R C 113, Fa. Clariant | Mineralölentschäumer | 0,2 |
| 5 | Titandioxide Kronos^{®} 2160, Fa. Kronos | Titandioxid, Weißpigment | 20,0 |
| 6 | Omyacarb^{®} 5 GU, Fa. Omya | Calciumcarbonat, Füllstoff | 20,0 |
| 7 | Ammoniak-Lösung (25%ig) | Alkalisierung | 0,2 |
| 8 | Wässrige Polymerdispersion aus den Beispielen | Bindemittel | 40,0 |
| 9 | Tafigel^{®} PUR 40, Fa. Münzing, 1:9 in Wasser | Urethanverdicker | 0,4 |
| 10 | Nipacide^{®} BIT 10 W, Fa. Clariant | Benzisothiazolinon, Biozid | 0,2 |
| | Summe | | 100 |

Die Komponenten 1 - 4 werden vorgelegt und mit einer Dissolverscheibe vermischt, danach werden die Komponenten 5 und 6 zu einer Pigmentdispersion bei hohen Rührergeschwindigkeiten dispergiert (Labordissolver mit 3000 U/min). Anschließend werden die Komponenten 7 - 10 unter langsamerem Rühren zugegeben (Labordissolver mit 500 U/min). Von den Weißdispersionsfarben wird die äußere Form beurteilt und die Viskosität mittels eines Kegel-Platte-Viskosimeters der Fa. Haake bei einer Scherrate von 1/60 sec⁻¹ bestimmt.

### Abtönen der Dispersionsfarben

Zum Einstellen eines bestimmten Farbtons werden den Weißdispersionsfarben Abtönpasten zugesetzt. Für das Ausprüfen der Farbstärke und Kompatibilität von Abtönpasten werden 200 g abgetönte Dispersionsfarbe bestehend aus 98 Gew.-% Weißdispersionsfarbe und 2 Gew.-% einer Blaupigmentpaste in eine Blechdose geben und 60 Sekunden in einem Inkshaker 500 der Fa. Olbrich Know How, Hemer homogenisiert. Die verwendeten Abtönpasten haben folgende Zusammensetzungen.

### Blaupigmentpaste

| Nr. | Komponente | Zusammensetzung/Eigenschaft | in Gew.-% |
|---|---|---|---|
| 1 | Wasser | | 32,8 |
| 2 | Dispersogen^{®} PTS, Fa. Clariant | Dispergiermittel | 6,7 |
| 3 | D-Foam-R C 740, Fa. Clariant | Siliconölentschäumer | 0,3 |
| 4 | Nipacide^{®} BSM, Fa. Clariant | Benzisothiazolinon, Biozid | 0,2 |
| 5 | Polyglykol G 300, Fa. Clariant | Feuchthaltemittel | 10,0 |
| 6 | Hostaperm^{®} Blau B2G, Fa. Clariant | Phthalocyaninpigment, Color Index PB 15:3 | 50,0 |
| | Summe | | 100,0 |

### Violettpigmentpaste

| Nr. | Komponente | Zusammensetzung/Eigenschaft | in Gew.-% |
|---|---|---|---|
| 1 | Wasser | | 52,8 |
| 2 | Dispersogen^{®} PTS, Fa. Clariant | Dispergiermittel | 6,7 |
| 3 | D-Foam-R C 740, Fa. Clariant | Siliconölentschäumer | 0,3 |
| 4 | Nipacide^{®} BSM, Fa. Clariant | Benzisothiazolinon, Biozid | 0,2 |
| 5 | Polyglykol G 300, Fa. Clariant | Feuchthaltemittel | 10,0 |
| 6 | Hostaperm^{®} Violet RL 02, Fa. Clariant | Triphenodioxazinpigment, Color Index PV 23 | 30,0 |
| | Summe | | 100,0 |

### Schwarzpigmentpaste

| Nr. | Komponente | Zusammensetzung/Eigenschaft | in Gew.-% |
|---|---|---|---|
| 1 | Wasser | | 39,5 |
| 2 | Dispersogen^{®} PTS, Fa. Clariant | Dispergiermittel | 10,0 |
| 3 | D-Foam-R C 740, Fa. Clariant | Siliconölentschäumer | 0,3 |
| 4 | Nipacide^{®} BSM, Fa. Clariant | Benzisothiazolinon, Biozid | 0,2 |
| 5 | Polyglykol G 300, Fa. Clariant | Feuchthaltemittel | 10,0 |
| 6 | Spezial Schwarz 4, Fa. Evonik | Rußpigment, Color Index PBk 7 | 40,0 |
| | Summe | | 100,0 |

Zur Bestimmung der Farbstärke und der Kompatibilität der Farbpasten in der Weißdispersionsfarbe werden die abgetönten Dispersionsfarben nach einem Tag auf einem Prüfkarton mit einer 120 µm Rakel auf einem Filmziehgerät, Modell 509 MC der Fa. Erichsen GmbH, Hemer ausgestrichen. Nach 7 Minuten wird der Rubout-Test auf dem trocknenden Farbfilm in der in der Schrift US-3840383 beschriebenen Weise durchgeführt. Von dem vollständig getrockneten Film werden nach 24 Stunden die farbmetrischen Werte mit einem Konica - Minolta Spektrophotometer Modell CM 3600 bestimmt.

### Beispiel 1 (Vergleichsbeispiel)

### Styrol/Acrylat-Polymerdispersionen

Es werden 1060 g einer Monomeremulsion bestehend aus folgenden Komponenten durch Zugabe in ein Glasgefäß und unter Rühren hergestellt.

| | |
|---|---|
| 215,4 g | vollentsalztes Wasser, |
| 25,0 g | einer 27%igen Lösung eines Nonylphenolpolyethylenglykolethersulfates, Natriumsalz mit 25 Ethylenoxideinheiten (Hostapal^{®} BVQ 25, Fa. Clariant, Emulgator gemäß Stand der Technik, |
| 32,1 g | eines nichtionischen Emulgators (Emulsogen^{®} LCN 287, Fa. Clariant, Undecylpolyethylenglykolether mit 28 Ethylenoxideinheiten, Komponente (C)), |
| 7,5 g | Acrylsäure (Monomer der Komponente (A)), |
| 15,0 g | Methacrylsäure (Monomer der Komponente (A)), |
| 15,0 g | Methacryamid (Monomer der Komponente (A)), |
| 412,0 g | 2-Ethylhexylacrylat (Monomer der Komponente (A)), |
| 338,0 g | Styrol (Monomer der Komponente (A)). |

Parallel wird eine Initiatorlösung bestehend aus 2,6 g Ammoniumperoxodisulfat und 71,7 g vollentsalztem Wasser hergestellt. In einem 2 Liter Reaktionsgefäß werden folgende Komponenten vorgelegt:

| | |
|---|---|
| 374,0 g | vollentsalztes Wasser und |
| 2,8 g | einer 27%igen Lösung eines Nonylphenolpolyethylenglykolethersulfates, Natriumsalz mit 25 Ethylenoxideinheiten (Hostapal^{®} BVQ 25, Fa. Clariant, Emulgator gemäß Stand der Technik). |

Unter Stickstoffatmosphäre und Rühren mit einem Ankerrührer wird die Emulgatorlösung im Reaktionsgefäß auf 80 °C erwärmt und 23,0 g der Monomeremulsion und 14,9 g der Initiatorlösung zugegeben. Sobald die radikalische Polymerisationsreaktion beginnt, steigt die Temperatur des Reaktionsgemisches an und die Reaktionswärme wird durch Kühlung des Reaktionsgefäßes abgeführt. Die restliche Monomeremulsion und 29,7 g Initiatorlösung werden über einen Zeitraum von 3 Stunden bei 80 °C dosiert. Anschließend werden weitere 29,7 g Initiatorlösung hinzugegeben und eine Stunde bei 80 °C gerührt. Die erhaltene wässrige Polymerdispersion wird auf 60 °C abgekühlt, 21,4 g einer 7 %igen tert.-Butylhydroperoxidlösung hinzugegeben und eine weitere Stunde bei 60 °C gerührt, um nicht umgesetzte Monomeren möglichst vollständig zu polymerisieren. Aus demselben Grund werden anschließend 30,0 g einer 5 %igen Natriumdisulfitlösung dosiert und eine weitere Stunde bei 60 °C gerührt. Danach wird die wässrige Polymerdispersion abgekühlt und der pH-Wert mit 37,5 g einer 10 %igen Natriumhydroxidlösung auf 7 - 8 eingestellt.

### Eigenschaften der Polymerdispersion

| Test | Ergebnis |
|---|---|
| Feststoffgehalt | 49,9 Gew.-% |
| Koagulat | 289 ppm |
| Teilchengröße | 151,6 nm |
| Viskosität | 896 mPas |
| Gefrier-Tau-Stabilität | Nach 5 Zyklen stabil |
| Lagerstabilitätstest | stabil |
| Elektrolytbeständigkeit | stabil |

### Verwendung der Polymerdispersion als Pigmentbindemittel

| Test | Ergebnis |
|---|---|
| Äußeres der Weißdispersionsfarbe | Homogene, viskose, weiße, gut streichbare Paste |
| Viskosität der Weißdispersionsfarbe | 1,49 Pas |
| Farbstärke der blau abgetönten Farbe | 100 % (als Standard gesetzt) |
| Farbstärke der violett abgetönten Farbe | 100 % (als Standard gesetzt) |
| Farbstärke der schwarz abgetönten Farbe | 100 % (als Standard gesetzt) |

### Beispiel 2 (Vergleichsbeispiel)

### Styrol/Acrylat-Polymerdispersionen

Es werden 1060 g einer Monomeremulsion bestehend aus folgenden Komponenten durch Zugabe in ein Glasgefäß und unter Rühren hergestellt.

| | |
|---|---|
| 215,4 g | vollentsalztes Wasser, |
| 25,0 g | einer 27%igen Lösung eines Laurylpolyethylenglykolethersulfates, Ammoniumsalz mit 8 Ethylenoxideinheiten (Emulsogen^{®} LA 083, Fa. Clariant, Emulgator gemäß Stand der Technik, |
| 32,1 g | eines nichtionischen Emulgators (Emulsogen^{®} LCN 287, Fa. Clariant, Undecylpolyethylenglykolether mit 28 Ethylenoxideinheiten, Komponente (C)), |
| 7,5 g | Acrylsäure (Monomer der Komponente (A)), |
| 15,0 g | Methacrylsäure (Monomer der Komponente (A)), |
| 15,0 g | Methacryamid (Monomer der Komponente (A)), |
| 412,0 g | 2-Ethylhexylacrylat (Monomer der Komponente (A)), |
| 338,0 g | Styrol (Monomer der Komponente (A)). |

Parallel wird eine Initiatorlösung bestehend aus 2,6 g Ammoniumperoxodisulfat und 71,7 g vollentsalztem Wasser hergestellt. In einem 2 Liter Reaktionsgefäß werden folgende Komponenten vorgelegt:

| | |
|---|---|
| 374,0 g | vollentsalztes Wasser und |
| 2,8 g | einer 27 %igen Lösung eines Laurylpolyethylenglykolethersulfates, Ammoniumsalz mit 8 Ethylenoxideinheiten (Emulsogen^{®} LA 083, Fa. Clariant, Emulgator gemäß Stand der Technik). |

Die wässrige Polymerdispersion wird in gleicher Weise wie in Beispiel 1 hergestellt. Die wässrige Polymerdispersion wird zur Formulierung einer Weißdispersionsfarbe verwendet, welche anschließend jeweils mit der Blau-, Violett- und Schwarzpigmentpaste für Farbstärkebestimmung abgetönt wird.

### Eigenschaften der Polymerdispersion

| Test | Ergebnis |
|---|---|
| Feststoffgehalt | 51,8 Gew.-% |
| Koagulat | 193 ppm |
| Teilchengröße | 121,4 nm |
| Viskosität | 1970 mPas |
| Gefrier-Tau-Stabilität | Nach 5 Zyklen stabil |
| Lagerstabilitätstest | stabil |
| Elektrolytbeständigkeit | stabil |

### Verwendung der Polymerdispersion als Pigmentbindemittel

| Test | Ergebnis |
|---|---|
| Äußeres der Weißdispersionsfarbe | Homogene, viskose, weiße, gut streichbare Paste |
| Viskosität der Weißdispersionsfarbe | 1,22 Pas |
| Farbstärke der blau abgetönten Farbe | 97 % (im Vergleich mit Beispiel 1) |
| Farbstärke der-violett abgetönten Farbe | 106 % (im Vergleich mit Beispiel 1) |
| Farbstärke der schwarz abgetönten Farbe | 97 % (im Vergleich mit Beispiel 1) |

### Beispiel 3 (Vergleichsbeispiel)

### Styrol/Acrylat-Polymerdispersionen

Es werden 1060 g einer Monomeremulsion bestehend aus folgenden Komponenten durch Zugabe in ein Glasgefäß und unter Rühren hergestellt.

| | |
|---|---|
| 225,4 g | vollentsalztes Wasser, |
| 15,0 g | einer 50 %igen Lösung eines Polyalkylenglykolethersulfates, Ammoniumsalz (Emulsogen^{®} PF 20 S, Fa. Clariant, Emulgator gemäß Stand der Technik), |
| 32,1 g | eines nichtionischen Emulgators (Emulsogen^{®} LCN 287, Fa. Clariant, Undecylpolyethylenglykolether mit 28 Ethylenoxideinheiten, Komponente (C)), |
| 7,5 g | Acrylsäure (Monomer der Komponente (A)), |
| 15,0 g | Methacrylsäure (Monomer der Komponente (A)), |
| 15,0 g | Methacryamid (Monomer der Komponente (A)), |
| 412,0 g | 2-Ethylhexylacrylat (Monomer der Komponente (A)), |
| 338,0 g | Styrol (Monomer der Komponente (A)). |

Parallel wird eine Initiatorlösung bestehend aus 2,6 g Ammoniumperoxodisulfat und 71,7 g vollentsalztem Wasser hergestellt. In einem 2 Liter Reaktionsgefäß werden folgende Komponenten vorgelegt:

| | |
|---|---|
| 375,3 g | vollentsalztes Wasser und |
| 1,5 g | einer 50 %igen Lösung eines Polyalkylenglykolethersulfates, Ammoniumsalz (Emulsogen^{®} PF 20 S, Fa. Clariant, Emulgator gemäß Stand der Technik). |

Die wässrige Polymerdispersion wird in gleicher Weise wie in Beispiel 1 hergestellt. Die wässrige Polymerdispersion wird zur Formulierung einer Weißdispersionsfarbe verwendet, welche anschließend jeweils mit der Blau-, Violett- und Schwarzpigmentpaste für Farbstärkebestimmung abgetönt wird.

### Eigenschaften der Polymerdispersion

| Test | Ergebnis |
|---|---|
| Feststoffgehalt | 50,5 Gew.-% |
| Koagulat | 92 ppm |
| Teilchengröße | 165,9 nm |
| Viskosität | 815 mPas |
| Gefrier-Tau-Stabilität | Nach 5 Zyklen stabil |
| Lagerstabilitätstest | stabil |
| Elektrolytbeständigkeit | stabil |

### Verwendung der Polymerdispersion als Pigmentbindemittel

| Test | Ergebnis |
|---|---|
| Äußeres der Weißdispersionsfarbe | Homogene, viskose, weiße, gut streichbare Paste |
| Viskosität der Weißdispersionsfarbe | 1,09 Pas |
| Farbstärke der blau abgetönten Farbe | 114 % (im Vergleich mit Beispiel 1) |
| Farbstärke der violett abgetönten Farbe | 159 % (im Vergleich mit Beispiel 1) |
| Farbstärke der schwarz abgetönten Farbe | 112 % (im Vergleich mit Beispiel 1) |

### Beispiel 4

### Erfindungsgemäße Styrol/Acrylat-Polymerdispersionen

Es werden 1060 g einer Monomeremulsion bestehend aus folgenden Komponenten durch Zugabe in ein Glasgefäß und unter Rühren hergestellt.

| | |
|---|---|
| 232,9 g | vollentsalztes Wasser, |
| 7,5 g | eines phosphorgruppenhaltigen Polyalkylenglykol-Blockcopolymeren gemäß Formel (I) mit m = 66, n = 38 und M = Wasserstoff |
| | (Komponente (B)), |
| 32,1 g | eines nichtionischen Emulgators (Emulsogen^{®} LCN 287, Fa. Clariant, Undecylpolyethylenglykolether mit 28 Ethylenoxideinheiten, Komponente (C)), |
| 7,5 g | Acrylsäure (Monomer der Komponente (A)), |
| 15,0 g | Methacrylsäure (Monomer der Komponente (A)), |
| 15,0 g | Methacryamid (Monomer der Komponente (A)), |
| 412,0 g | 2-Ethylhexylacrylat (Monomer der Komponente (A)), |
| 338,0 g | Styrol (Monomer der Komponente (A)). |

Parallel wird eine Initiatorlösung bestehend aus 2,6 g Ammoniumperoxodisulfat und 71,7 g vollentsalztem Wasser hergestellt. In einem 2 Liter Reaktionsgefäß werden folgende Komponenten vorgelegt:

| | |
|---|---|
| 376,1 g | vollentsalztes Wasser und |
| 0,8 g | eines phosphorgruppenhaltigen Polyalkylenglykol-Blockcopolymeren gemäß Formel (I) mit m = 66, n = 38 und M = Wasserstoff (Komponente (B)). |

Die wässrige Polymerdispersion wird in gleicher Weise wie in Beispiel 1 hergestellt. Die wässrige Polymerdispersion wird zur Formulierung einer Weißdispersionsfarbe verwendet, welche anschließend jeweils mit der Blau-, Violett- und Schwarzpigmentpaste für Farbstärkebestimmung abgetönt wird.

### Eigenschaften der Polymerdispersion

| Test | Ergebnis |
|---|---|
| Feststoffgehalt | 50,8 Gew.-% |
| Koagulat | 97 ppm |
| Teilchengröße | 225,0 nm |
| Viskosität | 572 mPas |
| Gefrier-Tau-Stabilität | Nach 5 Zyklen stabil |
| Lagerstabilitätstest | stabil |
| Elektrolytbeständigkeit | stabil |

### Verwendung der Polymerdispersion als Pigmentbindemittel

| Test | Ergebnis |
|---|---|
| Äußeres der Weißdispersionsfarbe | Homogene, viskose, weiße, gut streichbare Paste |
| Viskosität der Weißdispersionsfarbe | 1,00 Pas |
| Farbstärke der blau abgetönten Farbe | 116 % (im Vergleich mit Beispiel 1) |
| Farbstärke der violett abgetönten Farbe | 162 % (im Vergleich mit Beispiel 1) |
| Farbstärke der schwarz abgetönten Farbe | 108 % (im Vergleich mit Beispiel 1) |

### Beispiel 5

### Erfindungsgemäße Styrol/Acrylat-Polymerdispersionen

Es werden 1060 g einer Monomeremulsion bestehend aus folgenden Komponenten durch Zugabe in ein Glasgefäß und unter Rühren hergestellt.

| | |
|---|---|
| 202,9 g | vollentsalztes Wasser, |
| 37,5 g | einer 20 %igen Lösung eines Natriumsalzes eines phosphorgruppenhaltigen Polyalkylenglykol-Blockcopolymeren gemäß Formel (I) mit m = 66, n = 38 und M = Natrium (Emulsogen^{®} 4133, Fa. Clariant, Komponente (B)), |
| 32,1 g | eines nichtionischen Emulgators (Emulsogen^{®} LCN 287, Fa. Clariant, Undecylpolyethylenglykolether mit 28 Ethylenoxideinheiten, Komponente (C)), |
| 7,5 g | Acrylsäure (Monomer der Komponente (A)), |
| 15,0 g | Methacrylsäure (Monomer der Komponente (A)), |
| 15,0 g | Methacryamid (Monomer der Komponente (A)), |
| 412,0 g | 2-Ethylhexylacrylat (Monomer der Komponente (A)), |
| 338,0 g | Styrol (Monomer der Komponente (A)). |

Parallel wird eine Initiatorlösung bestehend aus 2,6 g Ammoniumperoxodisulfat und 71,7 g vollentsalztem Wasser hergestellt. In einem 2 Liter Reaktionsgefäß werden folgende Komponenten vorgelegt:

| | |
|---|---|
| 373,1 g | vollentsalztes Wasser und |
| 3,8 g | einer 20 %igen Lösung eines Natriumsalzes eines phosphorgruppenhaltigen Polyalkylenglykol-Blockcopolymeren gemäß Formel (I) mit m = 66, n = 38 und M = Natrium (Emulsogen^{®} 4133, Fa. Clariant, Komponente (B)). |

Die wässrige Polymerdispersion wird in gleicher Weise wie in Beispiel 1 hergestellt. Die wässrige Polymerdispersion wird zur Formulierung einer Weißdispersionsfarbe verwendet, welche anschließend jeweils mit der Blau-, Violett- und Schwarzpigmentpaste für Farbstärkebestimmung abgetönt wird.

### Eigenschaften der Polymerdispersion

| Test | Ergebnis |
|---|---|
| Feststoffgehalt | 49,9 Gew.-% |
| Koagulat | 178 ppm |
| Teilchengröße | 231,1 nm |
| Viskosität | 438 mPas |
| Gefrier-Tau-Stabilität | Nach 5 Zyklen stabil |
| Lagerstabilitätstest | stabil |
| Elektrolytbeständigkeit | stabil |

### Verwendung der Polymerdispersion als Pigmentbindemittel

| Test | Ergebnis |
|---|---|
| Äußeres der Weißdispersionsfarbe | Homogene, viskose, weiße, gut streichbare Paste |
| Viskosität der Weißdispersionsfarbe | 0,84 Pas |
| Farbstärke der blau abgetönten Farbe | 107 % (im Vergleich mit Beispiel 1) |
| Farbstärke der violett abgetönten Farbe | 148 % (im Vergleich mit Beispiel 1) |
| Farbstärke der schwarz abgetönten Farbe | 103 % (im Vergleich mit Beispiel 1) |

### Beispiel 6

### Erfindungsgemäße Styrol/Acrylat-Polymerdispersionen

Es werden 1060 g einer Monomeremulsion bestehend aus folgenden Komponenten durch Zugabe in ein Glasgefäß und unter Rühren hergestellt.

| | |
|---|---|
| 221,6 g | vollentsalztes Wasser, |
| 18,8 g | einer 20 %igen Lösung eines Natriumsalzes eines phosphorgruppenhaltigen Polyalkylenglykol-Blockcopolymeren gemäß Formel (I) mit m = 66, n = 38 und M = Natrium (Emulsogen^{®} 4133, Fa. Clariant, Komponente (B), 0,5 % bezogen auf die in Wasser unlöslichen Monomere statt 1,0 % wie in den Beispielen 1 - 5), |
| 32,1 g | eines nichtionischen Emulgators (Emulsogen^{®} LCN 287, Fa. Clariant, Undecylpolyethylenglykolether mit 28 Ethylenoxideinheiten, Komponente (C)), |
| 7,5 g | Acrylsäure (Monomer der Komponente (A)), |
| 15,0 g | Methacrylsäure (Monomer der Komponente (A)), |
| 15,0 g | Methacryamid (Monomer der Komponente (A)), |
| 412,0 g | 2-Ethylhexylacrylat (Monomer der Komponente (A)), |
| 338,0 g | Styrol (Monomer der Komponente (A)). |

Parallel wird eine Initiatorlösung bestehend aus 2,6 g Ammoniumperoxodisulfat und 71,7 g vollentsalztem Wasser hergestellt. In einem 2 Liter Reaktionsgefäß werden folgende Komponenten vorgelegt:

| | |
|---|---|
| 373,1 g | vollentsalztes Wasser und |
| 3,8 g | einer 20 %igen Lösung eines Natriumsalzes eines phosphorgruppenhaltigen Polyalkylenglykol-Blockcopolymeren gemäß Formel (I) mit m = 66, n = 38 und M = Natrium (Emulsogen^{®} 4133, Fa. Clariant, Komponente (B)). |

Die wässrige Polymerdispersion wird in gleicher Weise wie in Beispiel 1 hergestellt. Die wässrige Polymerdispersion wird zur Formulierung einer Weißdispersionsfarbe verwendet, welche anschließend jeweils mit der Blau-, Violett- und Schwarzpigmentpaste für Farbstärkebestimmung abgetönt wird.

### Eigenschaften der Polymerdispersion

| Test | Ergebnis |
|---|---|
| Feststoffgehalt | 50,0 Gew.-% |
| Koagulat | 342 ppm |
| Teilchengröße | 249,5 nm |
| Viskosität | 371 mPas |
| Gefrier-Tau-Stabilität | Nach 5 Zyklen stabil |
| Lagerstabilitätstest | stabil |
| Elektrolytbeständigkeit | stabil |

### Verwendung der Polymerdispersion als Pigmentbindemittel

| Test | Ergebnis |
|---|---|
| Äußeres der Weißdispersionsfarbe | Homogene, viskose, weiße, gut streichbare Paste |
| Viskosität der Weißdispersionsfarbe | 0,86 Pas |
| Farbstärke der blau abgetönten Farbe | 113 % (im Vergleich mit Beispiel 1) |
| Farbstärke der violett abgetönten Farbe | 148 % (im Vergleich mit Beispiel 1) |
| Farbstärke der schwarz abgetönten Farbe | 113 % (im Vergleich mit Beispiel 1) |

## Patentansprüche

1. Wässrige Polymerdispersionen, enthaltend
(A) 1,0 bis 70,0 Gew.-% eines aus mindestens einem olefinisch ungesättigten Monomeren aufgebauten und durch Emulsionspolymerisation hergestellten Polymers,
(B) 0,01 bis 7 Gew.-% mindestens eines Polyalkylenglykol-Blockcopolymeren der Formel (I), 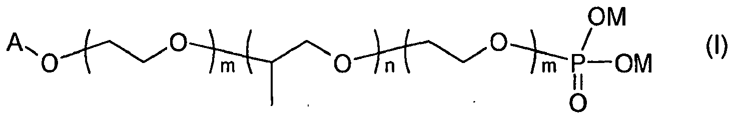 worin
A ein Wasserstoffatom oder eine Phosphatgruppe -PO₃M₂,
M ein Wasserstoffatom oder ein Natrium-, Kalium- oder Ammoniumion,
m eine Zahl von 1 bis 100 und
n eine Zahl von 3 bis 100 darstellt, und
(E) Wasser.

2. Wässrige Polymerdispersionen nach Anspruch 1, enthaltend
(C) 0,01 bis 5,0 Gew.-% mindestens eines nichtionischen Tensides.

3. Wässrige Polymerdispersionen nach Anspruch 1 oder 2, enthaltend
(D) 0,01 - 10,0 Gew.-% weitere, für die Herstellung von wässrigen Polymerdispersionen übliche Hilfsmittel ausgewählt aus zusätzlichen Netzmitteln, Schutzkolloiden, Lösemitteln, Entschäumern, Konservierungsmitteln, Puffersubstanzen und pH-Regulatoren.

4. Wässrige Polymerdispersion nach Anspruch 2, worin die Komponente (C) ausgewählt ist aus der Gruppe der
Fettalkoholethoxylate,
Di- und Tristyrylphenolethoxylate,
Fettsäureethoxylate,
Ester von Polyethylenglykolen mit Fettsäuren,
Fettsäurealkanolamidethoxylate,
EO/PO Blockcopolymere,
Fettalkohol-EO/PO Additionsprodukte, sowie
endgruppenverschlossenen Fettalkoholethoxylate.

5. Wässrige Polymerdispersion nach Anspruch 2, worin Komponente (C) ethoxylierte, lineare oder verzweigte, gesättigte oder ungesättigte C₈- bis C₂₂-Alkohole mit 1 bis 100 Ethoxygruppen umfasst.

6. Wässrige Polymerdispersion nach einem oder mehreren der Ansprüche 1 bis 5, welche eine Viskosität von 10 bis 10.000 mPas, bestimmt mit einem Kegel-Platte Viskosimeter bei einer Scherrate von 1/10 sec⁻¹, aufweist.

7. Wässrige Polymerdispersion nach einem oder mehreren der Ansprüche 1 bis 6,worin die Komponente B in einer Menge von 0,01 bis 7, bevorzugt von 0,1 bis 5 und besonders bevorzugt von 0,2 bis 2 Gew.% enthalten ist.

8. Wässrige Polymerdispersion nach einem oder mehreren der Ansprüche 1 bis 7, worin die Komponente A in einer Menge von 1,0 bis 70,0, bevorzugt von 5,0 bis 65,0 und besonders bevorzugt von 30,0 bis 60,0 Gew.% enthalten ist.

9. Wässrige Polymerdispersion nach einem oder mehreren der Ansprüche 1 bis 8 enthaltend Wasser ad 100 Gew.-%.

10. Verwendung von wässrigen Polymerdispersionen nach einem oder mehreren der Ansprüche 1 bis 9 als Pigmentbindemittel für die Herstellung von Formulierungen enthaltend mindestens ein anorganisches oder organisches Pigment.

## Claims

1. An aqueous polymer dispersion comprising
(A) 1.0 to 70.0 wt% of a polymer composed of at least one olefinically unsaturated monomer and prepared by emulsion polymerization,
(B) 0.01 to 7 wt% of at least one polyalkylene glycol block copolymer of the formula (I) 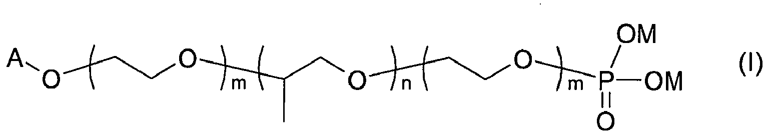 in which
A is a hydrogen atom or a phosphate group -PO₃M₂,
M is a hydrogen atom or a sodium, potassium or ammonium ion,
m is a number from 1 to 100 and
n is a number from 3 to 100, and
(E) water.

2. The aqueous polymer dispersion as claimed in claim 1, comprising
(C) 0.01 to 5.0 wt% of at least one nonionic surfactant.

3. The aqueous polymer dispersion as claimed in claim 1 or 2, comprising
(D) 0.01 - 10.0 wt% of further auxiliaries customary for the preparation of aqueous polymer dispersions and selected from additional wetting agents, protective colloids, solvents, defoamers, preservatives, buffer substances and pH regulators.

4. The aqueous polymer dispersion as claimed in claim 2, wherein component (C) is selected from the group consisting of
fatty alcohol ethoxylates,
di- and tristyrylphenol ethoxylates,
fatty acid ethoxylates,
esters of polyethylene glycols with fatty acids,
fatty acid alkanolamide ethoxylates,
EO/PO block copolymers,
fatty alcohol EO/PO adducts, and also
endgroup-capped fatty alcohol ethoxylates.

5. The aqueous polymer dispersion as claimed in claim 2, wherein component (C) comprises ethoxylated, linear or branched, saturated or unsaturated C₈- to C₂₂ alcohols having 1 to 100 ethoxy groups.

6. The aqueous polymer dispersion as claimed in one or more of claims 1 to 5, having a viscosity of 10 to 10 000 mPas, as determined using a cone/plate viscometer at a shear rate of 1/10 sec⁻¹.

7. The aqueous polymer dispersion as claimed in one or more of claims 1 to 6, wherein component B is present in an amount of 0.01 to 7, preferably of 0.1 to 5, and more preferably of 0.2 to 2 wt%.

8. The aqueous polymer dispersion as claimed in one or more of claims 1 to 7, wherein component A is present in an amount of 1.0 to 70.0, preferably of 5.0 to 65.0, and more preferably of 30.0 to 60.0 wt%.

9. The aqueous polymer dispersion as claimed in one or more of claims 1 to 8, comprising water ad 100 wt%.

10. The use of an aqueous polymer dispersion as claimed in one or more of claims 1 to 9, as pigment binder for producing formulations comprising at least one inorganic or organic pigment.

## Revendications

1. Dispersions aqueuses de polymères, contenant
(A) 1,0 à 70,0% en poids d'un polymère formé à partir d'au moins un monomère oléfiniquement insaturé et préparé par polymérisation en émulsion,
(B) 0,01 à 7% en poids d'au moins un copolymère à blocs de polyalkylèneglycol de formule (I), 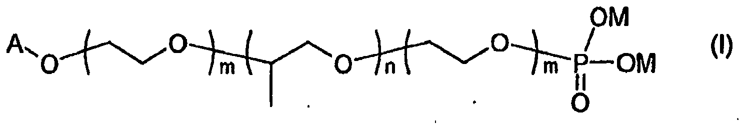 dans laquelle
A représente un atome d'hydrogène ou un groupe phosphate -PO₃M₂,
M représente un atome d'hydrogène ou un ion de sodium, de potassium ou d'ammonium,
m vaut un nombre de 1 à 100 et
n vaut un nombre de 3 à 100 et
(E) de l'eau.

2. Dispersions aqueuses de polymères selon la revendication 1, contenant
(C) 0,01 à 5,0% en poids d'au moins un agent tensioactif non ionique.

3. Dispersions aqueuses de polymères selon la revendication 1 ou 2, contenant
(D) 0,01-10,0% en poids d'autres adjuvants usuels pour la préparation de dispersions aqueuses de polymères, choisis parmi d'autres agents mouillants, les colloïdes de protection, les solvants, les antimousses, les conservateurs, les substances tampon et les régulateurs de pH.

4. Dispersion aqueuse de polymères selon la revendication 2, dans laquelle le composant (C) est choisi dans le groupe formé par les éthoxylates d'alcool gras, les éthoxylates de distyrylphénol et de tristyrylphénol, les éthoxylates d'acide gras, les esters de polyéthylèneglycols avec des acides gras, les éthoxylates d'alcanolamides d'acide gras, les copolymères à blocs d'OE/OP, les produits d'addition d'alcool gras-OE/OP ainsi que les éthoxylates d'alcool gras à groupes,terminaux bloqués.

5. Dispersion aqueuse de polymères selon la revendication 2, dans laquelle le composant (C) comprend des alcools éthoxylés, linéaires ou ramifiés, saturés ou insaturés en C₈-C₂₂ présentant 1 à 100 groupes éthoxy.

6. Dispersion aqueuse de polymères selon l'une ou plusieurs des revendications 1 à 5, qui présente une viscosité de 10 à 10 000 mPa.s, déterminée à l'aide d'un viscosimètre à cône-plaque à une vitesse de cisaillement de 1/10 sec⁻¹.

7. Dispersion aqueuse de polymères selon l'une ou plusieurs des revendications 1 à 6, dans laquelle le composant B est contenu en une quantité de 0,01 à 7, de préférence de 0,1 à 5 et de manière particulièrement préférée de 0,2 à 2% en poids.

8. Dispersion aqueuse de polymères selon l'une ou plusieurs des revendications 1 à 7, dans laquelle le composant A est contenu en une quantité de 1,0 à 70,0, de préférence de 5,0 à 65,0 et de manière particulièrement préférée de 30,0 à 60,0% en poids.

9. Dispersion aqueuse de polymères selon l'une ou plusieurs des revendications 1 à 8 contenant de l'eau ad 100% en poids.

10. Utilisation de dispersions aqueuses de polymères selon l'une ou plusieurs des revendications 1 à 9 comme liant de pigment pour la préparation de formulations contenant au moins un pigment inorganique ou organique.
